# EUROPEAN PATENT APPLICATION

(11) **EP 3 750 677 A1**
(43) Date of publication of application: **16.12.2020**
(21) Application number: 20174517.1
(22) Date of filing: 13.05.2020
(51) Int. Cl.: B27M 1/08, B23Q 17/00

(54) **MACHINE FOR WORKING WORKPIECES OF WOOD PROVIDED WITH AN IMPROVED PICKING-UP MEMBER, AND OPERATION METHOD THEREOF**

(30) Priority: 14.06.2019 IT 201900009057
(71) Applicant: SCM Group S.p.A., 47921 Rimini (RN) (IT)
(72) Inventor: BIANCHI, Fabio, 47921 RIMINI (RN) (IT)
(74) Representative: Tiburzi, Andrea

(57) **Abstract**

The present invention relates to a Machine (1) for working at least one workpiece (P) to work comprising: a base (2) for placing said machine (1) on the ground; and at least one picking-up member (5), coupled with said base (2), capable of clamping said workpiece (P), each comprising a supporting base (51), an upper plate (52) and a lower plate (53) relatively movable with each other and with respect to said supporting base (51), said machine (1) being characterized in that it comprises a measuring device (6) capable of measuring the relative distance between said upper plate (52) and said lower plate (53).

The present invention also relates to an operation method of the machine itself.

## Description

The present invention relates to a machine for working workpieces of wood provided with an improved picking-up member.

The present invention also relates to the operation method of the machine itself.

More specifically, the invention relates to a machine for the processing of workpieces made of wood, ceramic, glass, fiberglass, metals and the like having an oblong shape, mainly used for the construction of fixtures such as windows or balcony doors.

In the following the description will be directed to the processing of solid wood workpieces, but it is clear that the same should not be considered limited to this specific use, since the machine according to the invention can be advantageously used also for the processing of workpieces made of different materials.

Different types of machines for processing oblong wooden elements are known, equipped with various operating elements and gripping systems to firmly retain these elements during the execution of the operations provided in the planned work program.

Typically, the known machines are provided with picking-up members comprising a lower plate and an upper plate vertically movable, by means of respective actuator means, in relative approach and move away, to adapt the opening of the picking-up member to the size of the workpiece to be machined.

Some of these machines of the prior art comprise a measuring system for detecting the displacement of both the upper and lower plates.

In particular, said measuring systems comprise a first device for detecting the displacement of the lower plate and a second device for detecting the displacement of the upper part.

The disadvantage of these systems is represented by the need to separately detect movements, using different devices.

Measuring systems are also known, which comprise a single device arranged on a fixed part of the picking-up member, which however only detects the displacement of the upper part with respect to the lower part.

In light of the above, it is therefore an object of the present invention to provide a machine for processing workpieces comprising an improved picking-up member, provided with a simple and compact measuring system for detecting the displacement of the lower part and the higher part.

A further object of the present invention is to provide an operation method of the machine for controlling the correct positioning of the picking-up members.

Therefore, it is specific object of the present invention a machine for working at least one workpiece to work comprising a base for placing said machine on the ground; and at least one picking-up member, coupled with said base, capable of clamping said workpiece, each comprising a supporting base, an upper plate and a lower plate relatively movable with each other and with respect to said supporting base, said machine being characterized in that it comprises a measuring device capable of measuring the relative distance between said upper plate and said lower plate.

Further according to the invention, said machine may comprise a logic control unit for the operation of said machine, in which predetermined distance values between said upper plate and said lower plate, for working said workpiece are stored, said measuring device is capable of sending said measured values to said logic control unit; and said logic control unit is capable of comparing said received measured values and said predetermined values and of moving said upper plate and/or said lower plate, and/or issuing warning signals, and/or blocking the working of said machine, if said measured values are different from said predetermined values.

Preferably according to the invention, said warning signals are acoustic, and/or visual, and/or tactile.

Still according to the invention, said logic control unit is connectable to displaying means and said warning signals are displayed on said displaying means.

Further according to the invention, said logic control unit is configured for sending said warning signals to wearable device, and/or mobile device, and/or PC desktop.

Preferably according to the invention, said logic control unit is configured for sending said warning signals to a remote server cloud, which in turn sends said warning signals to wearable device, and/or mobile devices, and/or PC desktop.

Still according to the invention, said measuring device is integral with said lower plate.

Further according to the invention, said measuring device is integral with said upper plate.

Preferably according to the invention, said measuring device is a laser or ultrasonic or magnetic or optical scale type sensor.

It is further object of the present invention an operation method of a machine for working at least one workpiece to work of the type comprising a base for placing on the ground said machine, a plurality of picking-up members, coupled with said base, capable of clamping said workpiece, each comprising a supporting base, an upper plate and a lower plate relatively movable with each other and with respect to said supporting base, a logic control unit in which predetermined distance values between said upper plate and said lower plate, for the working of said machine, are stored, and a measuring device, said method comprising the following steps:
**a.** measuring a distance value between said upper plate and said lower plate;
**b.** sending said measured distance value to said logic control unit;
**c.** comparing said measured distance value with a predetermined distance value stored in said logic control unit;
**d.** if said measured value is different from said predetermined distance value, actuating controls on said machine and/or issuing warning signals and/or blocking the working of said machine.

Preferably according to the invention, said controls actuated in said step **d.** are the following:
- moving said upper plate, for reaching a distance value from said lower plate equal to said predetermined stored distance value;
- and/or moving said lower plate, for reaching a distance value from said upper plate equal to said predetermined stored distance value.

Still according to the invention, said steps **a.-d.** are repeated throughout the working of said machine.

The present invention will be now described, for illustrative but not limitative purposes, according to its preferred embodiments, with particular reference to the figures of the enclosed drawings, wherein:
figure 1 is an axonometric view of a machine for machining workpieces according to the present invention;
figure 2 is a perspective view of a picking-up member comprised in the machine of figure 1;
figure 3 is a schematic side view of the picking-up member in a waiting position for the pick-up of the workpiece;
figure 4 is a schematic side view of the picking-up member in a fully closed position;
figure 5 is a schematic side view of the picking-up member in a fully open position;
figure 6 is a further schematic side view of the picking-up member in a waiting position for the pick-up of the workpiece;
figure 7 is a schematic side view of a detail of the picking-up member shown in figure 6;
figure 8 is a further schematic side view of the picking-up member in a maximum closure position;
figure 9 is a further schematic side view of the picking-up member in a fully open position;
figure 10 is a schematic side view of a detail of the picking-up member shown in figure 9;
figure 11 is a further schematic side view of the picking-up member in a fully closed position;
figure 12 is a schematic side view of the picking-up member in a first position of a working sequence, in particular in the waiting position for the pick-up of the workpiece;
figure 13 is a schematic side view of the picking-up member in a second position of a working sequence, in particular in the workpiece clamping position;
figure 14 is a schematic side view of two picking-up members facing each other in a third position of a working sequence, in particular in the clamping position of a picking-up member and waiting position for the pick-up of the workpiece of the other picking-up member;
figure 15 is a schematic side view of two picking-up members facing each other in a fourth position of a working sequence, in particular in the maximum opening position of a gripping and clamping member of the workpiece of the other picking-up member;
figure 16 is a schematic side view of a picking-up member in the workpiece clamping position; and
figure 17 is a schematic side view of a picking-up member in the fully open position.

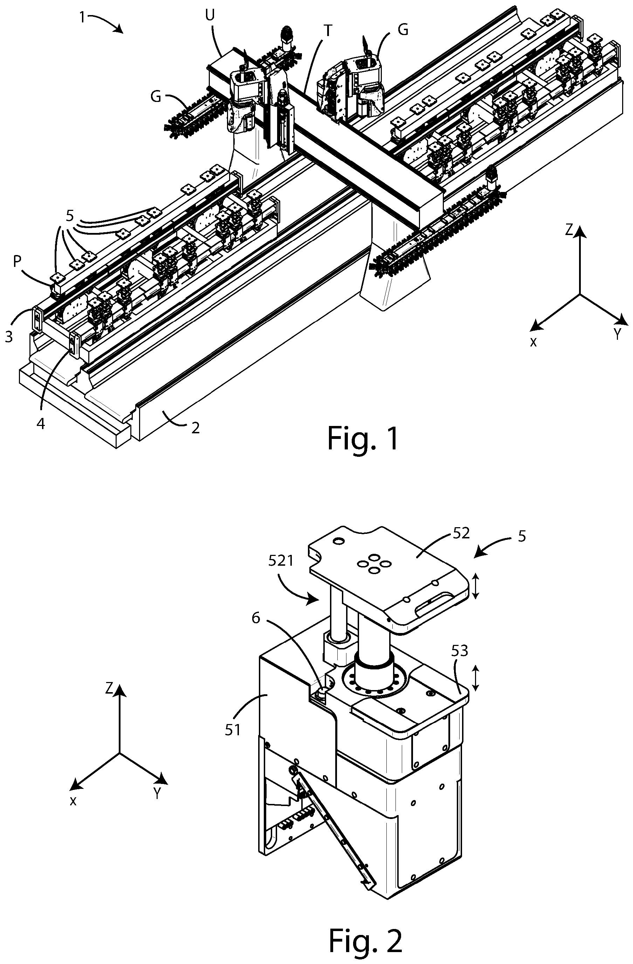

With reference to figure 1, with 1 it is indicated a machine for machining solid wood, with oblong shape and with a substantially square or rectangular section workpieces P, intended for example for the construction of frames for fixtures such as windows or balcony doors.

The aforementioned machine 1 comprises a base 2, in which a first bar 3 is provided, which develops along an axis parallel to the X axis of the Cartesian reference system XYZ, and a second **rail** 4 arranged side by side with said first **rail3,** which develops along an axis parallel to the X axis of the Cartesian reference system XYZ.

On each of these first 3 and second 4 **rail** there is a plurality of picking-up members 5, facing each other, capable of ensuring the gripping of one or more oblong shaped workpieces P.

Said machine 1 further comprises a crosspiece T, to which one or more processing groups G of said one or more workpieces P is coupled.

Said crosspiece T is movable with respect to said one or more workpieces P to carry out the machining.

Alternatively, it is possible that said one or more workpieces P are movable with respect to the crosspiece T, to undergo the machining.

Furthermore, it is possible that said crosspiece T and said one or more workpieces P are relatively movable for the processing of said one or more workpieces P.

Referring to figure 2, each picking-up member 5 comprises a support base 51, coupled to the respective rail 3 or 4, an upper plate 52 and a lower plate 53, vertically movable, by means of respective actuator means, in relative approaching and moving away between them and with respect to said support base 51, for contacting and clamping said workpiece P to be machined.

In particular, said upper plate 52 is capable of moving, by means of pneumatic or electric actuators 521, along an axis parallel to the Z axis of the Cartesian reference system XYZ, moving away from and approaching said lower plate 53 and said support base 51.

Said upper plate 52 is in fact capable of passing from a start-of-stroke position, in which it is arranged near said lower plate 53, and said actuators 521 are completely retracted in said support base 51, to an end-of-stroke position, in which said upper plate 52 is arranged in a distal position with respect to said lower plate 53, and said actuators 521 are completely extracted with respect to said support base 51.

Between said start position and said end position, said upper plate 52 can assume all the various intermediate stroke positions.

Similarly, said lower plate 53 is capable of moving along an axis parallel to the Z axis of the Cartesian reference system XYZ, away from and approaching said upper plate 52 and said support base 51.

Said lower plate 53 is also capable of passing from a start-of-stroke position, in which it is arranged at a certain distance from said support base 51, to an end-of-stroke position, in which it is arranged at a greater distance from said base support 51, with respect to the distance in which it is arranged in the start of travel position.

At least one picking-up member 5 is provided with a measuring device 6.

Without departing from the scope of the present invention, for a more effective operation of said picking-up members 5, each picking-up member 5 is provided with said measuring device 6.

Said measuring device 6 is integral with said lower plate 53 and is capable of measuring the relative displacement between said upper plate 52 and said lower plate 53.

Without departing from the scope of the present invention, said measuring device 6 can also be integral with said upper plate 52, and be able to measure the relative displacement between said upper plate 52 and said lower plate 53.

Said measuring device 6 is a laser, ultrasonic, telemetric, magnetic, optical line sensor, and the like.

Said machine 1 also comprises a logic control unit U for the operation of the machine 1 itself, in which the predefined reference operating data are stored, including the distances of said upper plate 52 and lower plate 53 from said support base 51, and the relative distances between said upper plate 52 and lower plate 53, based on the types of processing to be performed on said workpiece P.

In particular, a predetermined distance value between said upper plate 52 and lower plate 53 is associated with each possible configuration assumed by said upper plate 52 and lower plate 53, relatively to each other.

For example purposes only, the following distance values are associated between said upper plate 52 and lower plate 53, with the following configurations:
- 231 indicates that said upper plate 52 is in the end-of-stroke position and said lower plate 53 is in the end-of-stroke position;
- 71 indicates that said upper plate 52 is at the start-of-stroke position and said lower plate 53 is in the end-of-stroke position;
- 234 indicates that said upper plate 52 is in the end-of-stroke position and said lower plate 53 is in the start-of-stroke position.

Said logic control unit U can be provided with connection means, not shown in the figure, for connecting with a graphic interface D, such as for example a display.

Furthermore, said logic control unit U can connect directly with external devices such as wearable devices, and/or mobile devices, and/or desktop PCs associated with said machine 1, or via a remote cloud server via an Internet network, to send signals.

The operation of said machine 1 for processing wooden workpieces provided with an improved picking-up member, object of the present invention, takes place according to what is described below.

A workpiece P to be machined is loaded onto said first 3 or second rail 4 and clamped by one or more picking-up members of said plurality of picking-up members 5, based on the length of the same workpiece P.

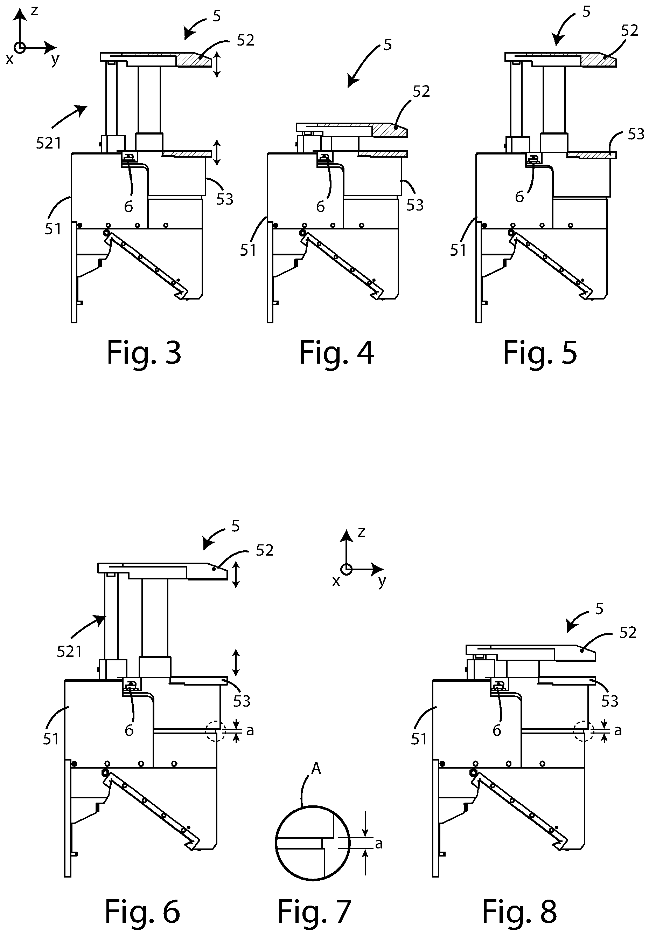

With reference to figures 3-17, in particular to figure 5, in the waiting configuration to pick up the workpiece P by said picking-up member 5, for example fixed to said first rail 3, said upper plate 52 is in said end-of-stroke position and said bottom plate 53 is in said start-of-stroke position.

Said measuring device 6 measures the relative distance between said upper plate 52 and lower plate 53, and sends said value to said logic control unit U.

Said logic control unit U compares said measured and received value from said measuring device 6 with said predetermined distance value relating to the workpiece pick-up configuration, for example with the value 234, and, if coinciding, said picking-up member 5 grips the workpiece P, passing to the locking configuration of the workpiece P.

Referring to figure 4, said picking-up member 5 is in the locking configuration of the workpiece P when said upper plate 52 is in said start-of-stroke position and said lower plate 53 is in said end-of-stroke position.

Said measuring device 6 measures the relative distance between said upper plate 52 and lower plate 53, and sends said value to said logic control unit U.

Said logic control unit U compares said measured and received value from said measuring device 6 with said predetermined distance value relating to the locking configuration of the workpiece P, for example with the value 71 and, if matching, said picking-up member 5 continues blocking the workpiece P, waiting for a facing picking-up member 5, fixed to the second rail 4, prepares to receive the workpiece P.

Referring to figure 3, in the configuration for releasing the workpiece P by said picking-up member 5, said upper plate 52 is in said end-of-stroke position and said lower plate 53 is in said end-of-stroke position.

Said measuring device 6 measures the relative distance between said upper plate 52 and lower plate 53, and sends said value to said logic control unit U.

Said logic control unit U compares said measured value received by said measuring device 6 with said predetermined distance value relating to the workpiece release configuration, for example with the value 231, and, if coinciding, said picking-up member 5 releases the workpiece P.

If as a result of the measurements made by said measuring device 6 and compared by said logic control unit U with said predetermined reference values, said picking-up member 5 is not in the correct position, then said upper plate 52 and/or said lower plate 53 are moved to assume the correct position necessary for picking up, or tightening or releasing said workpiece P.

Furthermore, if said values measured and received by said logic control unit U differ from said predetermined reference values, said logic control unit U can emit acoustic, visual, tactile and similar alarm signals.

Said logic control unit U sends said signals to said display D.

On said display D it is possible to display the alarm signals also in the form of legible tables of measured values.

Furthermore, said logic control unit U can send said alarm signals directly to said wearable devices, and/or mobile devices, and/or desktop PC.

Or, said logic control unit U can send said alarm signals to said remote cloud server, which in its turn sends said alarm signals to said wearable devices, and/or mobile devices, and/or desktop PC.

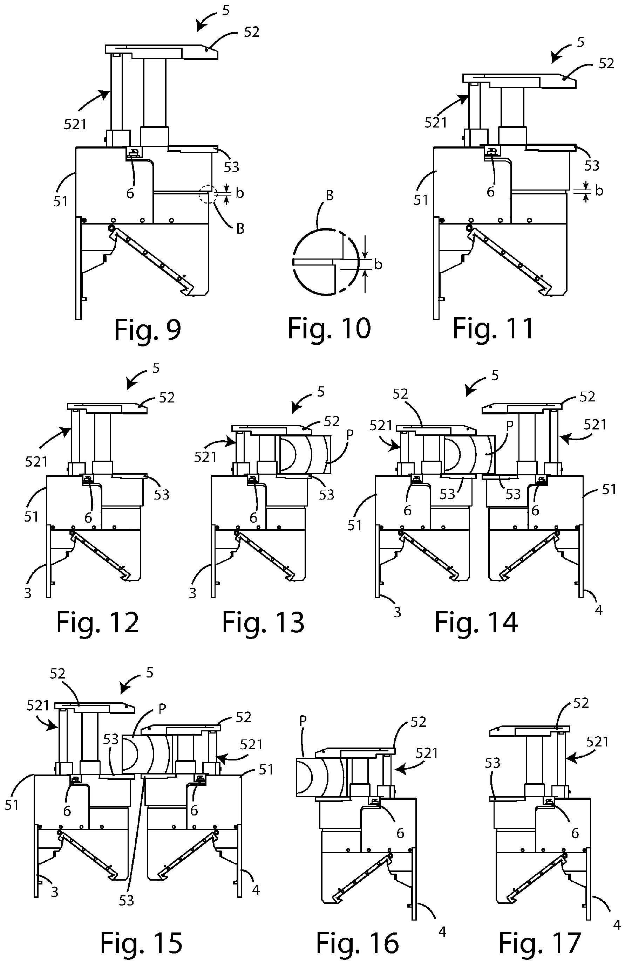

Referring in particular to the figures 12-17, a typical sequence of measurements by said measuring device 6 is as follow.

Initially said upper plate 52 is in said end-of-stroke position and said lower plate 53 is in said start-of-stroke position, waiting for the picking up of the workpiece P.

Said measuring device 6 measures the relative distance between said upper plate 52 and lower plate 53.

Said measuring device 6 then sends this measurement to said logic control unit U, which carries out a comparison with said stored preset values.

If said measurements match with said predetermined values, then said upper plate 52 and lower plate 53 remain stationary, otherwise they will be moved to reach the correct positions on the basis of the dimensions of the workpiece P to be blocked.

When the workpiece P is supplied to said picking-up member 5 of said first rail 3, said upper plate 52 moves to an intermediate stroke position to tighten said workpiece P.

Also, in this case, said measuring device 6 measures the relative distance between said upper plate 52 and lower plate 53, sends the measurement to said logic control unit U that controls the correct positioning of said upper plate 52.

From this measurement it is therefore also possible to detect the actual dimension of the workpiece P, since the measurement of the distance of said upper plate 52 corresponds to the measurement of the blocked workpiece P.

In the meantime, said picking-up member 5 of said second rail 4 is in the position of waiting for the picking up of the workpiece P.

Also for this picking-up member 5, measurements are taken from the respective measuring device 6, with the corresponding possible corrective actions on the positioning.

Subsequently said upper plate 52 of said picking-up member 5 coupled to said second rail 4 moves to an intermediate stroke position for tightening said workpiece P, while said upper plate 52 of said picking-up member 5 of said first rail 3 moves into said end-of-stroke position and said lower plate 53 of said picking-up member 5 of said first rail 3 moves to said end-of-stroke position to release the grip of said workpiece P.

Also in this phase, said measuring device 6 performs the measurements of the relative distances between said upper plate 52 and lower plate 53, to verify the correct positioning with respect to the reference values.

As is evident from the above description, said machine 1 with said improved picking-up member 5 allows to carry out the relative distance measurements between said upper 52 and lower 53 plates in all the picking up, tightening and releasing the workpiece P phases, checking correct positioning and possibly moving said plates in case of incorrect positioning with respect to predetermined reference values.

A further advantage of the present invention is given by the possibility of adapting the opening of the picking-up member to the workpiece, before performing the picking, thus optimizing the picking and clamping times of the workpiece itself.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for working at least one workpiece (P) to work comprising:
a base (2) for placing said machine (1) on the ground; and
at least one picking-up member (5), coupled with said base (2), capable of clamping said workpiece (P), each comprising a supporting base (51), an upper plate (52) and a lower plate (53) relatively movable with each other and with respect to said supporting base (51), said machine (1) being **characterized in that** it comprises a measuring device (6) capable of measuring the relative distance between said upper plate (52) and said lower plate (53).

2. Machine (1) according to the preceding claim, **characterized**
**in that** it comprises a logic control unit (U) for the operation of said machine (1), in which predetermined distance values between said upper plate (52) and said lower plate (53), for working said workpiece (P) are stored;
**in that** said measuring device (6) is capable of sending said measured values to said logic control unit (U); and
**in that** said logic control unit (U) is capable of comparing said received measured values and said predetermined values and of moving said upper plate (52) and/or said lower plate (53), and/or issuing warning signals, and/or blocking the working of said machine (1), if said measured values are different from said predetermined values.

3. Machine (1) according to the preceding claim, **characterized in that** said warning signals are acoustic, and/or visual, and/or tactile.

4. Machine (1) according to any one of claims 2 or 3, **characterized**
**in that** said logic control unit (U) is connectable to displaying means (D); and
**in that** said warning signals are displayed on said displaying means (D).

5. Machine (1) according to any one of claims 2-4, **characterized in that** said logic control unit (U) is configured for sending said warning signals to wearable device, and/or mobile device, and/or PC desktop.

6. Machine (1) according to any one of claims 2-4, **characterized in that** said logic control unit (U) is configured for sending said warning signals to a remote server cloud, which in turn sends said warning signals to wearable device, and/or mobile devices, and/or PC desktop.

7. Machine (1) according to any one of the preceding claims, **characterized in that** said measuring device (6) is integral with said lower plate (53).

8. Machine (1) according to any one of claims 1-6, **characterized in that** said measuring device (6) is integral with said upper plate (52).

9. Machine (1) according to any one of the preceding claims, **characterized in that** said measuring device (6) is a laser or ultrasonic or magnetic or optical scale type sensor.

10. Operation method of a machine (1) for working at least one workpiece (P) to work of the type comprising a base (2) for placing on the ground said machine (1), a plurality of picking-up members (5), coupled with said base (2), capable of clamping said workpiece (P), each comprising a supporting base (51), an upper plate (52) and a lower plate (53) relatively movable with each other and with respect to said supporting base (51), a logic control unit (U) in which predetermined distance values between said upper plate (52) and said lower plate (53), for the working of said machine (1), are stored, and a measuring device (6), said method comprising the following steps:
**a.** measuring a distance value between said upper plate (52) and said lower plate (53);
**b.** sending said measured distance value to said logic control unit (U);
**c.** comparing said measured distance value with a predetermined distance value stored in said logic control unit (U);
**d.** if said measured value is different from said predetermined distance value, actuating controls on said machine (1) and/or issuing warning signals and/or blocking the working of said machine (1).

11. Method according to the preceding claim, **characterized in that** said controls actuated in said step **d.** are the following:
- moving said upper plate (52), for reaching a distance value from said lower plate (53) equal to said predetermined stored distance value;
- and/or moving said lower plate (53), for reaching a distance value from said upper plate (52) equal to said predetermined stored distance value.

12. Method according to any one of claims 10 or 11, **characterized by** repeating said measurements and said comparisons throughout the working of said machine (1).
